# EUROPEAN PATENT APPLICATION

(11) **EP 2 283 907 A1**
(43) Date of publication of application: **16.02.2011**
(21) Application number: 09167602.3
(22) Date of filing: 11.08.2009
(51) Int. Cl.: B01D 29/13, B01D 35/30

(54) **Fluid purification assembly comprising a functional part and a casing**

(71) Applicant: Koninklijke Philips Electronics N.V., 5621 BA Eindhoven (NL)
(72) Inventor: The designation of the inventor has not yet been filed
(74) Representative: Damen, Daniel Martijn

(57) **Abstract**

A fluid purification assembly such as a filter assembly (2) comprises two parts (11, 20) which are removable with respect to each other, wherein one of the parts (11, 20) is a functional part (11) which comprises means (10) for performing a purifying function on a fluid, and wherein another of the parts (11, 20) is a casing (20) which has a space (23) for receiving and accommodating the functional part (11). The functional part (11) further comprises a flexible outer shell (16) which encloses interior components of the functional part (11) in a fluid-tight manner, and which is adapted to expand under the influence of pressure that is exerted when a fluid to be purified flows through the functional part (11) during operation of the fluid purification assembly (2), and to contact an inner wall (28) of the casing (20) in an expanded state.

## Description

### FIELD OF THE INVENTION

The present invention relates to a fluid purification assembly such as a filter assembly, comprising two parts which are removable with respect to each other, wherein one of the parts is a functional part which comprises means for performing a purifying function on a fluid, and wherein another of the parts is a casing which has a space for receiving and accommodating the functional part. The present invention also relates to a functional part for use in such a fluid purification assembly.

### BACKGROUND OF THE INVENTION

A filter assembly comprising a functional part and a casing having a space for receiving and accommodating the functional part is known. For example, US 5,840,188 discloses a liquid filter casing and filter bag assembly which includes a reticulated basket fitted within a casing chamber and supported by the casing, and a replaceable filter bag positioned within the reticulated basket. The filter bag includes a flexible flange which terminates with a bulbous lip which frictionally engages the casing to secure and seal the bag at the casing and basket. For the purpose of releasing the bag, which may be desirable for replacement or cleaning of the bag, for example, a handle is provided. When the handle is pulled, the flange is flexed so as to release an engagement between the bulbous lip and a part of the casing wall.

In general, in known filter assemblies comprising a functional part and a casing, the casing serves for providing fluid-tightness and pressure resistance. The means which are part of the functional part, and which serve for performing a filtering function on a fluid, get contaminated over time, as a result of which their performance is decreased, so that it is desirable to have an option of removing these means from the filter assembly and/or a device of which the filter assembly is part. Basically, when it comes to a removal action as mentioned, filter assemblies are available in two variants: one in which the filter assembly can only be replaced as a whole, and one in which only the functional part can be replaced. In the latter variant, the casing is re-used and a new functional part is fitted.

Both of the above-described variants have their design limitations and issues. The first variant involves relatively high costs of ownership and a large (non-recyclable) waste stream. In the latter variant, the casing needs to be designed such as to be capable of being opened and closed by a user for replacement of the functional part. The design of such a casing is a compromise between fluid-tightness at high pressure on the one hand, and an easy to open lid of the casing on the other hand. From expert experience, it is known that the two conflicting specification points are very hard to combine, and generally result in a critical design. Furthermore, in the latter variant, a user needs to handle dirty filters during a replacement action.

### SUMMARY OF THE INVENTION

It is an object of the present invention to provide a solution to the above-sketched problem. In particular, it is an object of the present invention to provide a fluid purification assembly in which the functional part and the casing are removable with respect to each other, wherein there is no need to find a compromise between desired fluid-tightness and ease of use. This object is achieved by a fluid purification assembly comprising a functional part and a casing as defined earlier, wherein the functional part further comprises a flexible outer shell which encloses interior components of the functional part in a fluid-tight manner, and which is adapted to expand under the influence of pressure that is exerted when a fluid to be purified flows through the functional part during operation of the fluid purification assembly, and to contact an inner wall of the casing in an expanded state.

In the fluid purification assembly according to the present invention, due to the fact that the functional part has an outer shell as defined, the functional part is fluid-tight in itself. Therefore, there is no need for the casing to contribute to the fluid-tightness. Instead, the casing only needs to provide the mechanical structure to resist against high pressures, which are exerted when the fluid purification assembly is operated and a fluid flows through the functional part. Hence, when the present invention is applied, instead of attributing both functions of providing fluid-tightness and providing resistance against pressures to the casing, only the function of providing resistance against pressures is attributed to the casing, while the function of providing fluid-tightness is attributed to the functional part. In particular, when the fluid purification assembly is operated and the functional part is in place inside the casing, the outer shell of the functional part expands, like a balloon, as it were, whether being made of stretchable material, or not, until the size and shape of the outer shell is such that it touches an inner wall of the casing. At that point, the casing prevents further expansion of the outer shell of the functional part on the basis of its resistance against pressures.

The statement that the outer shell is adapted to contact an inner wall of the casing in an expanded state should be understood such as to mean that the size and shape of the outer shell in a non-operative state and the flexibility of the outer shell are chosen such that when pressure is exerted as a result of an inflow of fluid, the outer shell reaches the inner wall of the casing and is pressed against this wall. In a practical embodiment of the fluid purification assembly according to the present invention, the casing is made of a rigid material. In any case, it is advantageous if the material of the casing is far less flexible than the material of the outer shell of the functional part.

On the basis of the fact that according to the present invention, the casing does not play a role in providing fluid-tightness, there is no need for any connection between the functional part and the casing. In particular, there is no need for an application of sealing means between the functional part and the casing. Hence, removing the functional part from the casing does not need to involve more than simply taking out the functional part. An important difference with respect to the prior art is that in the known assemblies, a connection needs to be released first before the functional part can be taken out, as is the case with the assembly known from US 5,840,188. Likewise, according to the present invention, when the two parts of the fluid purification assembly are put together, this action does not need to involve more than simply putting the functional part in place in the casing. Another advantage of the application of the present invention is that the means for performing a purifying function are sealed inside the functional part, so that a user cannot touch these means and get uncomfortable/dirty.

In a practical embodiment of the fluid purification assembly according to the present invention, the functional part may comprise a fluid purification element and two end caps, wherein the fluid purification element is sandwiched between the end caps, and wherein at least one of the end caps has at least one hole for letting in fluid to be purified to the functional part and conducting the fluid to the fluid purification element, and wherein at least one of the end caps has at least one hole for letting out purified fluid from the functional part, in particular from a space between the fluid purification element and the outer shell. Furthermore, it is possible for the casing to comprise at least two parts which are removable with respect to each other, wherein one of the parts has an opening which is large enough for the functional part to pass through, and wherein another of the parts is adapted to be coupled to the first part, and to block a possible movement from the functional part out of the casing. In such a case, as the casing does not have a function in providing fluid-tightness of the fluid purification assembly, it is possible that in an assembled state of the casing, the parts of the casing are directly coupled to each other without any sealing means being present between the parts.

The walls of the casing may be closed, except for one or more holes for allowing a fluid inlet and a fluid outlet of the functional part to pass, but it is also possible for the casing to be a non-airtight part such as a colander.

The fluid purification assembly according to the present invention can be applied in many types of devices. For example, the fluid purification assembly may be incorporated in a device for purifying fluid under the influence of ultraviolet radiation, which furthermore comprises a source for emitting ultraviolet light. The fluid purification assembly is easy to use, wherein particularly an action of replacing the functional part of the fluid purification assembly can be performed by any person, as this action does not need to involve more than the steps of opening the casing, taking out the functional part, putting in a new and/or cleaned functional part, and closing the casing again. In the process, contact between the person performing the replacing action and dirty components of the functional part cannot occur. Due to its design, according to which the functional part comprises a flexible outer shell, which is adapted to expand and contact an inner wall of the casing during operation of the fluid purification assembly, both fluid-tightness and resistance against pressures of the fluid purification assembly are optimal. Furthermore, costs are relatively low, due to the fact that there is no need for using sealing means in the fluid purification assembly, among other things, and due to the fact that the casing is a non-removable component of a device in which the fluid purification assembly is applied.

The above-described and other aspects of the present invention will be apparent from and elucidated with reference to the following detailed description of an embodiment of a filter assembly according to the present invention.

### BRIEF DESCRIPTION OF THE DRAWINGS

The present invention will now be explained in greater detail with reference to the figures, in which equal or similar parts are indicated by the same reference signs, and in which:
figure 1 diagrammatically shows a sectional view of a conventional filter assembly;
figure 2 diagrammatically shows a sectional view of a functional part of a filter assembly according to the present invention; and
figure 3 diagrammatically shows a sectional view of the filter assembly according to the present invention.

### DETAILED DESCRIPTION OF EMBODIMENTS

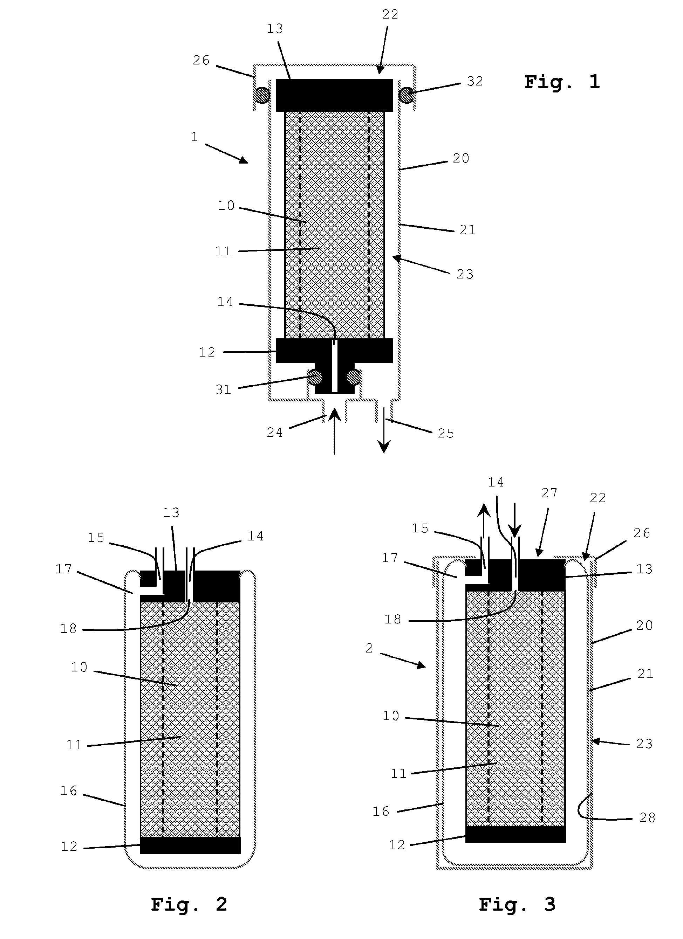

In order to obtain a good understanding of the present invention, it is helpful to take a look at a conventional filter assembly first. Figure 1 shows such a filter assembly 1. It is generally known that filtering involves the use of filtering means which are adapted to extract impurities from a fluid such as air or water. In the process, the fluid is passed through the filtering means, which may comprise any suitable type as known in the art.

The filtering means of the conventional filter assembly 1 comprise a filter element 10 which is arranged inside a part of the filter assembly 1 that is referred to as functional part 11. The functional part 11 furthermore comprises two end caps 12, 13, wherein each end cap 12, 13 is arranged at another end of the filter element 10, such that the filter element 10 is sandwiched between the end caps 12, 13. The end caps 12, 13 can be glued to the filter element 10, for example. One of the end caps 12, 13 is provided with a suitable hole 14 for allowing a fluid to be filtered to reach the filter element 10 through the end cap 12.

Another part of the filter assembly 1 is a part which is referred to as casing 20, and which serves for receiving and accommodating the functional part 11. The casing 20 comprises a basic body 21, which has a functional part receiving opening 22 for allowing the functional part 11 to reach a position inside an open space 23 of the basic body 21 from the outside of the basic body 21. Furthermore, the basic body 21 has smaller openings 24, 25, namely a fluid inlet opening 24 for allowing a fluid to be filtered to enter the casing 20, and a fluid outlet opening 25 for allowing a filtered fluid to be discharged from the casing 20. The casing 20 also comprises a lid 26 for closing the functional part receiving opening 22.

The operation of the filter assembly 1 is as follows. A fluid to be subjected to a filtering process is supplied to the filter assembly 1 through the fluid inlet opening 24. Pressure is exerted on the fluid in order to achieve that the fluid reaches the filter element 10 through the end cap 12 that is present at the side of the filter assembly 1 where the fluid inlet opening 24 is located, and flows through the filter element 10. At a certain point, the fluid exits the filter element 10, and flows towards the fluid outlet opening 25, through which the filtered fluid is eventually discharged. For sake of clarity, an inlet flow and an outlet flow of the fluid are indicated by means of arrows in figure 1.

A notable feature of the filter assembly 1 as shown in figure 1 is that the functional part 11 is removably arranged inside the casing 20. An advantage of this fact is that it is possible to replace a filter element 10 which has been used for some time and which has lost effectiveness due to contamination by a fresh filter element 10. In order to save costs and the environment, the option of having a replaceable functional part 11 in a filter assembly 1 is preferred over an option of having a filter assembly which needs to be replaced as a whole, with both the functional part 11 and the casing 20.

In view of the removable arrangement of the functional part 11 inside the casing 20, connections between the functional part 11 and the casing 20 need to be detachable, and the same is applicable to connections between the basic body 21 and the lid 26 of the casing 20. In order to avoid leakage of fluid through the detachable connections, sealing means are provided. For example, sealing rings 31, 32 may be used, wherein one of the sealing rings 31, 32 is arranged between the functional part 11 and the casing 20, and wherein another of the sealing rings 31, 32 is arranged between the basic body 21 and the lid 26 of the casing 20. Due to the presence of the sealing means 31, 32, there is a certain resistance that requires an application of pressure in the processes of detaching the lid 26 from the basic body 21, detaching the functional part 11 from the casing 20, putting the functional part 11 in place inside the casing 20, and putting the lid 26 in place on the basic body 21. Furthermore, there is risk of leakage, as the sealing means 31, 32 may lose their performance over time and/or may get dislocated. In the filter assembly 2 according to the present invention, these disadvantages are no longer applicable, as will now be explained on the basis of figures 2 and 3.

Figure 2 shows the functional part 11 of the filter assembly 2 according to the present invention, and figure 3 shows both parts 11, 20 of the filter assembly 2 according to the present invention, i.e. the functional part 11 and the casing 20, in an assembled, operative state. Like the functional part 11 of the conventional filter assembly 1, the functional part 11 of the filter assembly 2 according to the present invention comprises a filter element 10 and two end caps 12, 13. However, according to the present invention, the functional part 11 has an additional component, namely a flexible outer shell 16, which encloses the components of the functional part 11 in a fluid-tight manner. The flexible outer shell 16 may be made of a stretchable material, but it is also possible that non-stretchable material is applied. The outer shell 16 may be made of a foil, for example, which is a practical and relatively cheap option.

In the embodiment of the functional part 11 as shown in figures 2 and 3, both a fluid inlet hole 14 and a fluid outlet hole 15 are arranged in one of the end caps 12, 13, wherein the fluid inlet hole 14 extends from outside of the functional part 11 to the filter element 10, and the fluid outlet hole 15 extends from a space 17 between the outer shell 16 and the filter element 10 to outside of the functional part 11. The fluid that is supplied to the filter element 10 during operation of the filter assembly 2 enters the functional part 11 through the fluid inlet hole 14 in the end cap 13, and cannot exit the functional part 11 in another way than through the fluid outlet hole 15. The outer shell 16 is attached to the end cap 13, and spans the entire circumference of the end cap 13, at a position between an outlet end 18 of the fluid inlet hole 14 in the end cap 13 and the outside, so that it is actually achieved that the presence of the outer shell 16 guarantees fluid-tightness. For sake of clarity, an inlet flow and an outlet flow of the fluid are indicated by means of arrows in figure 3.

For sake of completeness, it is noted that an inlet flow and an outlet flow may also be interchanged. In the shown example, fluid to be filtered enters the filter element 10 at a central position, and exits the filter element 10 at a circumferential position. However, in principle, it is just as well possible that fluid to be filtered enters the filter element 10 at a circumferential position, and exits the filter element 10 at a central position.

As the fluid is only contained by the functional part 11 during operation of the filter assembly 2, there is no need for the casing 20 to be provided with openings 24, 25 for letting in fluid or letting out fluid to the interior space 23 of the casing 20. In the shown example, the lid 26 is provided with a hole 27 for allowing connections to the fluid inlet hole 14 and the fluid outlet hole 15 which are arranged in one of the end caps 12, 13 to pass. If it is desired to have a colander-like appearance of the casing 20, other holes may be present in the basic body 21 and/or the lid 26 as well. In any case, contact between the fluid and the shell 20 does not occur in the filter assembly 2 according to the present invention. The fact that the fluid stays inside the functional part 11 under all circumstances is very advantageous, as situations in which a user can come into contact with the fluid when replacing the functional part 11 do not occur.

During operation of the filter assembly 2, a fluid is supplied to the functional part 11, wherein pressure is exerted in order to force the fluid to flow through the filter element 10. In the process, the flexible outer shell 16 expands. When the material of the outer shell 16 is a stretchable material, the expansion is realized as a result of stretching of the material, and when the material of the outer shell 16 is a non-stretchable material, the outer shell 16 may initially be folded, wherein an expansion of the outer shell 16 involves a fold straightening process. It is also possible to have a mix of stretchable material and non-stretchable material in the outer shell 16. The outer shell 16 is allowed to expand, and it is no problem that the outer shell 16 cannot provide resistance against the pressures, in view of the fact that it is the casing 20 which can perform this function. As soon as the outer shell 16 touches an inner wall 28 of the casing, the expansion stops.

It follows from the foregoing description of the operation of the filter assembly 2 according to the present invention that the functional part 11 has a function in guaranteeing fluid-tightness of the filter assembly 2, whereas the casing 20 has a function in withstanding the pressures which are prevailing when a fluid is forced to flow through the functional part 11. Hence, the two important functions as mentioned are divided among the two parts 11, 20 of the filter assembly 2, which is different from the conventional situation, in which both functions are attributed to the casing 20. An insight underlying the present invention is that the casing 20 may very well be used for preventing the flexible outer shell 16 of the functional part 11 from over-stretching and failure, while the application of the outer shell 16 prevents leakage and eliminates the need for any sealing means 31, 32 between the functional part 11 and the casing 20, or between the basic body 21 and the lid 26 of the casing 20. Therefore, in the design of the filter assembly 2 according to the present invention, there is no compromise between the fluid-tightness and the capability to withstand pressures on the one hand, and the ease of opening the casing 20 and replacing the functional part 11 on the other hand. The fluid-tightness and the resistance against pressures can be optimal, while a process of replacing the functional part 11 only requires minimum effort of a user.

It will be clear to a person skilled in the art that the scope of the present invention is not limited to the examples discussed in the foregoing, but that several amendments and modifications thereof are possible without deviating from the scope of the present invention as defined in the attached claims. While the present invention has been illustrated and described in detail in the figures and the description, such illustration and description are to be considered illustrative or exemplary only, and not restrictive. The present invention is not limited to the disclosed embodiments.

Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the present invention.

The present invention can be used for any disposable filter media where a combination of liquid-tightness or gas-tightness is required, combined with a resistance against pressure. An example of an application of the filter assembly 2 is an application as a water purification filter.

In a general sense, the present invention relates to a fluid purification assembly. The filter assembly 2 as shown and described in the foregoing is only one example of such a fluid purification assembly.

The present invention can be summarized as follows. A fluid purification assembly such as a filter assembly 2 comprises two parts 11, 20 which are removable with respect to each other, wherein one of the parts 11, 20 is a functional part 11 which comprises means 10 for performing a purifying function on a fluid, and wherein another of the parts 11, 20 is a casing 20 which has a space 23 for receiving and accommodating the functional part 11. The functional part 11 further comprises a flexible outer shell 16 which encloses interior components of the functional part 11 in a fluid-tight manner, and which is adapted to expand under the influence of pressure that is exerted when a fluid to be purified flows through the functional part 11 during operation of the fluid purification assembly 2, and to contact an inner wall 28 of the casing 20 in an expanded state.

In the fluid purification assembly 2 according to the present invention, the functional part 11 is a fluid-tight part due to the presence of the outer shell 16 as mentioned, whereas the casing 20 has a function in providing the necessary resistance to pressures which are exerted when fluid flows through the functional part 11 during operation of the fluid purification assembly 2. On the basis of the fact that the functions of providing fluid-tightness and providing resistance to pressures are divided among the two parts 11, 20 of the fluid purification assembly 2, both functions can be optimized. Furthermore, a process of replacing the functional part 11 can be very simple, as there is no need for connections between the functional part 11 and the casing 20 in the fluid purification assembly 2. Moreover, handling a fluid-tight functional part is very convenient to a user, as the user is not exposed to the fluid.

## Claims

1. Fluid purification assembly such as a filter assembly (2), comprising two parts (11, 20) which are removable with respect to each other, wherein one of the parts (11, 20) is a functional part (11) which comprises means (10) for performing a purifying function on a fluid, and wherein another of the parts (11, 20) is a casing (20) which has a space (23) for receiving and accommodating the functional part (11), wherein the functional part (11) further comprises a flexible outer shell (16) which encloses interior components of the functional part (11) in a fluid-tight manner, and which is adapted to expand under the influence of pressure that is exerted when a fluid to be purified flows through the functional part (11) during operation of the fluid purification assembly (2), and to contact an inner wall (28) of the casing (20) in an expanded state.

2. Fluid purification assembly (2) according to claim 1, wherein the outer shell (16) of the functional part (11), in an assembled state of the fluid purification assembly (2), is without any connection to the casing (20).

3. Fluid purification assembly (2) according to claim 1, wherein, in an assembled state of the fluid purification assembly (2), the functional part (11) is located inside the casing (20) without any sealing means (31, 32) being present between the functional part (11) and the casing (20).

4. Fluid purification assembly (2) according to claim 1, wherein the outer shell (16) of the functional part (11) is made of a non-stretchable material.

5. Fluid purification assembly (2) according to claim 1, wherein the outer shell (16) of the functional part (11) comprises a foil.

6. Fluid purification assembly (2) according to claim 1, wherein the functional part (11) comprises a fluid purification element (10) and two end caps (12, 13), wherein the fluid purification element (10) is sandwiched between the end caps (12, 13), and wherein at least one of the end caps (12, 13) has at least one hole (14) for letting in fluid to be purified to the functional part (11) and conducting the fluid to the fluid purification element (10), and wherein at least one of the end caps (12, 13) has at least one hole (15) for letting out purified fluid from the functional part (11), in particular from a space (17) between the fluid purification element (10) and the outer shell (16).

7. Fluid purification assembly (2) according to claim 1, wherein the casing (20) comprises at least two parts (21, 26) which are removable with respect to each other, wherein one of the parts (21, 26) has an opening (22) which is large enough for the functional part (11) to pass through, and wherein another of the parts (21, 26) is adapted to be coupled to the first part (21), and to block a possible movement from the functional part (11) out of the casing (20).

8. Fluid purification assembly (2) according to claim 7, wherein, in an assembled state of the casing (20), the parts (21, 26) of the casing (20) are directly coupled to each other without any sealing means (31, 32) being present between the parts (21, 26).

9. Fluid purification assembly (2) according to claim 1, wherein the casing (20) is a non-airtight part such as a colander.

10. Fluid purification assembly (2) according to claim 1, wherein the casing (20) is made of a rigid material.

11. Device for purifying fluid under the influence of ultraviolet radiation, comprising a source for emitting ultraviolet light, and a fluid purification assembly (2) according to claim 1.

12. Part (11) for use in a fluid purification assembly (2) comprising a casing (20) which has a space (23) for receiving and accommodating the part (11), wherein the part (11) comprises means (10) for performing a purifying function on a fluid, and a flexible outer shell (16) which encloses interior components of the part (11) in a fluid-tight manner, and which is made of a non-stretchable material.

13. Part (11) according to claim 12, wherein the outer shell (16) comprises a foil.

14. Part (11) according to claim 12, comprising a fluid purification element (10) and two end caps (12, 13), wherein the fluid purification element (10) is sandwiched between the end caps (12, 13), and wherein at least one of the end caps (12, 13) has at least one hole (14) for letting in fluid to be purified to the functional part (11) and conducting the fluid to the fluid purification element (10), and wherein at least one of the end caps (12, 13) has at least one hole (15) for letting out purified fluid from the functional part (11), in particular from a space (17) between the fluid purification element (10) and the outer shell (16).
